# EUROPÄISCHE PATENTSCHRIFT

(11) **EP 1 470 977 B1**
(45) Veröffentlichungstag und Bekanntmachung des Hinweises auf die Patenterteilung: **24.05.2006**
(21) Anmeldenummer: 04009178.7
(22) Anmeldetag: 17.04.2004
(51) Int. Cl.: B60T 7/22

(54) **Parkhilfe für ein Kraftfahrzeug**
Parking assisting device for a motor vehicle
Appareil d'assistance au parking pour un véhicule automobile

(30) Priorität: 23.04.2003 DE 10318389
(43) Veröffentlichungstag der Anmeldung: 27.10.2004
(73) Patentinhaber: Volkswagen Aktiengesellschaft, 38436 Wolfsburg (DE)
(72) Erfinder: Killiana, Elias, 38162 Cremlingen (DE)

(56) Entgegenhaltungen:
- DE-A- 4 339 066
- DE-A- 10 026 586
- DE-A- 19 601 831
- DE-A- 19 809 416

## Beschreibung

Die vorliegende Erfindung betrifft eine Parkhilfe für ein Kraftfahrzeug nach dem Oberbegriff von Anspruch 1.

Parkhilfen für Kraftfahrzeuge, die mehrere an dem Kraftfahrzeug angebrachte Abstandssensoren zum Ermitteln des jeweiligen Abstandes zwischen dem Kraftfahrzeug und einem Hindernis aufweisen, sind bereits seit langem bekannt. Es sei hier beispielhaft die DE-OS 29 32 118 genannt, die eine Rangierhilfe für Kraftfahrzeuge offenbart, bei der an dem Kraftfahrzeug als Abstandssensoren Reflex-Lichtschranken angeordnet sind, die bei Annäherung des Kraftfahrzeugs an ein Hindernis eine optische Warnvorrichtung im Innenraum des Kraftfahrzeugs betätigen. Anstelle der in dieser Druckschrift beschriebenen Reflex-Lichtschranken werden heutzutage im allgemeinen Ultraschall-, Radar-, Laser- oder Infrarotsensoren als Abstandssensoren eingesetzt, welche in verschiedenen Ausführungsformen bekannt sind.

Um zu verhindern, dass der Fahrer des Kraftfahrzeugs während eines Einpark- oder Rangiervorgangs ständig eine optische und/oder akustische und/oder haptische Warnvorrichtung im Kraftfahrzeug beobachten oder beachten muss, sind weiterhin Park- und Fahrhilfen der eingangs genannten Art bekannt, die neben den Abstandssensoren auch eine Steuereinrichtung aufweisen, die in Abhängigkeit von den von den Abstandssensoren ermittelten Abstandswerten zu einem Hindernis aktiv in den Fahrbetrieb des Kraftfahrzeugs eingreifen. Die Sicherheit und der Komfort für den Fahrer können hierdurch wesentlich erhöht werden.

In diesem Zusammenhang sind Parkhilfen bekannt, die bei Erkennen einer drohenden Kollision des Kraftfahrzeugs mit einem Hindernis, wobei dieser Umstand mittels geeigneter Abstandssensoren erfasst wird, in das Bremsensystem des Kraftfahrzeugs eingreifen. Insbesondere wird hierbei zum Beispiel der Bremsdruck erhöht und das Kraftfahrzeug gegebenenfalls zum Stillstand gebracht. Beispiele derartiger Systeme sind in der DE 197 15 622 A1 und der DE 197 45 127 A1 beschrieben.

Neben diesem Eingriff in das Bremsensystem des Kraftfahrzeugs kann zusätzlich oder alternativ auch die Motorleistung des Kraftfahrzeugs beeinflusst, d. h. gedrosselt werden, falls mittels der Abstandssensoren eine drohende Kollision des Kraftfahrzeugs mit einem Hindernis erkannt wird. Ein derartiges System ist zum Beispiel in der DE 196 07 788 A1 offenbart.

Eine weitere Möglichkeit, aktiv in den Fahrbetrieb des Kraftfahrzeugs einzugreifen, wenn mittels Abstandssensoren eine Annäherung an ein Hindernis erkannt wird, besteht darin, automatisch in das Lenksystem des Kraftfahrzeugs einzugreifen. Dies geschieht beispielsweise, indem der durch den Fahrer einstellbare Lenkwinkel auf einen die Kollision verhindernden Bereich begrenzt wird oder das Lenkrad bei Überschreiten des eine Kollision verhindernden Lenkwinkels in durch den Fahrer wahrnehmbare Vibrationen versetzt wird. Derartige Lenksysteme sind zum Beispiel in den Druckschriften DE 198 31 071 C2, EP 0 738 647 B1 und EP 0 718 173 B1 offenbart.

Der Vollständigkeit halber sei an dieser Stelle auch erwähnt, dass aus dem Stand der Technik ferner Einparkhilfen bekannt sind, welche den Fahrer des Kraftfahrzeugs bei der Einhaltung des optimalen Fahrwegs beim Einparken in eine Parklücke unterstützen, wie dies zum Beispiel in der DE OS 19 38 151 und der DE 38 13 083 C3 beschrieben ist.

Außerdem sind bereits verschiedene Systeme bekannt, mit denen das Fahrzeug einen Einparkvorgang automatisch, d. h. selbsttätig durchführen kann. Es sei an dieser Stelle beispielhaft auf die EP 0 931 712 A2, die US 5,931,252, die US 5,957,232, die US 6,018,692 und die US 6,070,684 verwiesen.

Eine Einparkhilfe, welche bei Heranfahren an ein Hindernis automatisch bremst ist aus der DE 43 39 066 A1 bekannt. Dabei wird die Bremskraft umso größer, je geringer der Abstand wird. Bei einem bestimmten Grenzwert wird die Bremskraft so groß, dass das Fahrzeug nicht weiter bewegt werden kann.

Ausgehend von dem vorgenannten Stand der Technik liegt der vorliegenden Erfindung die Aufgabe zugrunde, eine verbesserte elektronische Parkhilfe für Kraftfahrzeuge vorzusehen, mit der eine der Fahrsituation angepasste Einparkhilfe bereitgestellt wird.

Diese Aufgabe wird durch eine Parkhilfe mit den Merkmalen des Anspruchs 1 gelöst. Vorteilhafte Ausgestaltungen und Weiterbildungen der Erfindung sind in den abhängigen Ansprüchen angegeben.

Die Parkhilfe für ein Kraftfahrzeug ist mit mindestens einem an dem Kraftfahrzeug anbringbaren Abstandssensor zum Ermitteln mindestens eines Abstandswertes zwischen dem Kraftfahrzeug und mindestens einem Hindernis, sowie mit einer Steuereinrichtung, die in Abhängigkeit von mindestens einem ermittelten Abstandswert in mindestens einen Fahrparameter einer Fahrzeugeinrichtung des Kraftfahrzeugs eingreift, ausgerüstet. Weiterhin ist in der Steuereinrichtung mindestens ein Grenzwert für einen Abstandswert speicherbar oder ist dort gespeichert. Der Grenzwert ist in Abhängigkeit der Fahrsituation veränderbar, wobei die Steuereinrichtung bei Unter- und/oder Überschreitung des mindestens einen Grenzwertes in einen Fahrparameter eingreift.

Für jeden Abstandssensor ist mindestens ein Grenzwert für einen Abstandswert speicherbar. Sofern der Abstandssensor einen räumlichen Bereich erfasst, z. B. einen dreieck- oder kegelförmigen Bereich, kann in diesem Bereich eine Funktion für die Grenzwerte, z. B. eine Begrenzungsfläche, gelten. In diesem Fall erstreckt sich eine zumindest in Abschnitten linienartige oder flächenartige Funktion als Grenzwertfunktion im Erfassungsbereich des Sensors. Sofern mehrere Sensoren vorhanden sind, können sich die Erfassungsbereiche direkt aneinander anschließen oder zumindest teilweise überlappen. Es ist auch möglich, dass Sensoren Abschnitte des umgebenden Fahrzeugraumes erfassen, welche sich nicht überlappen oder berühren.

Für jeden Abstandswert ist unabhängig mindestens ein Grenzwert des Kraftfahrzeugs zu mindestens einem Hindernis in Abhängigkeit der Fahrsituation veränderbar. Die Steuereinrichtung greift dann in mindestens einen Fahrparameter des Kraftfahrzeugs ein, wenn ein ermittelter Abstand wenigstens eines Abstandssensors den so angepassten unteren Grenzwert unterschreitet. Die erfindungsgemäße Parkhilfe wird somit dynamisch an die aktuelle Fahrsituation angepasst, sodass in unterschiedlichen Situationen sowohl die Genauigkeit des Parkvorgangs als auch die Sicherheit und der Komfort für den Fahrer erhöht werden.

Als Fahrparameter sind beispielsweise die Empfindlichkeit der Bremse oder des Bremspedals, die Empfindlichkeit der Lenkung oder die Empfindlichkeit des Gaspedals oder des Motorgassystems zu verstehen. Im weiteren Sinn sollen auch die Parametrierung oder Auslösung reversibler Sicherheitsmassnahmen (z. B. Aktivierung eines reversiblen Gurtstraffer) als Eingriff in einen Fahrparameter zählen. Die Fahrparameter können dabei auch dynamisch verändert werden, so dass beispielsweise die Empfindlichkeit des Gaspedals mit Annäherung an ein Hindernis kontinuierlich reduziert wird, während gleichzeitig die Empfindlichkeit des Bremssystems erhöht wird. Ein Bremswunsch wird somit sehr schnell erkannt und umgesetzt, während ein versehentliches, zu starkes Gasgeben aufgrund der reduzierten Empfindlichkeit des Gaspedals keine hohe Beschleunigung des Fahrzeugs hervorruft und somit nicht zu einer Kollision mit einem Hindernis führen kann.

Damit der Fahrer über den Eingriff in den Fahrparameter oder bei Unter- und/oder Überschreitung mindestens eines Grenzwertes informiert wird, ist eine akustische und/oder optische und/oder haptische Warnung vorgesehen. Dem Fahrer liegt somit eine Information über veränderte Fahrparameter und ggf. veränderte Fahreigenschaften des Kraftfahrzeugs vor.

In weiterer Ausgestaltung der Erfindung ist die Steuereinrichtung derart ausgebildet, dass mindestens ein Grenzwert eine Funktion von der Fahrgeschwindigkeit und/oder der Fahrtrichtung und/oder des Lenkwinkels des Kraftfahrzeugs ist. Wenn der Fahrer beispielsweise rückwärts in eine diagonal zurückliegende Längsparklücke auf der Beifahrerseite neben der Fahrbahn einparkt, so wird auch der fahrerseitige, rückwärtige Raum überwacht. Schlägt der Fahrer die Lenkung ein, so wird der Überwachungsraum derart verändert, dass nun in Anhängigkeit des Lenkwinkels der Raum überwacht wird, in dessen Richtung der Fahrer aufgrund der vorgenommenen Lenkbewegung fahren wird. Weiterhin kann beispielsweise beim Einparken in eine Kopfparklücke, mindestens ein front- oder heckseitiger Grenzwert reduziert werden, da der Fahrer in der Regel mit geringer Geschwindigkeit einparkt. Dieses führt zu einer erhöhten Akzeptanz der Park- und/oder Fahrhilfe durch einen Fahrzeugführer, da dieser nicht unnötig früh gewarnt wird.

Bei Unter- und/oder Überschreitung mindestens eines Grenzwertes greift die Steuereinrichtung vorteilhaft in einen Fahrparameter des Bremssystems und/oder des Motors und/oder des Gaspedals und/oder der Lenkung des Kraftfahrzeugs ein. Dieses sind wesentliche Fahrzeugkomponenten, welche vorteilhaft zur Kollisionsvermeidung genutzt werden können. Das Maß des Eingriffs der Steuereinrichtung in den Fahrparameter kann dabei von der Geschwindigkeit und/oder der momentanen Beschleunigung und/oder der momentanen Fahrtrichtung und/oder der Fahrsituation abhängen. Wenn der Fahrer in eine Längsparklücke diagonal hinter dem Fahrzeug einparkt, muss der Fahrer die Verkehrssituation umfassend im Blick haben, z.B. Gegenverkehr, parkende Fahrzeuge neben und hinter sich, Fußgänger und Fahrradfahrer im Einparkbereich. Wenn der Fahrer nun das Fahrzeug zum Stillstand bringen möchte, weil beispielsweise ein Fußgänger oder ein anderes Objekt in den gewünschten Parkbereich kommt, so ist ein schnelles Ansprechen der Bremse erwünscht, so dass in Bezug auf die Bremse ein hohes Eingriffsmaß durch die Steuereinrichtung in den Fahrparameter in dieser Fahrsituation gewünscht ist. Das Eingriffsmaß kann auch von mindestens einem ermittelten Abstandwert abhängen. Die Fahrbahnneigung und/oder das Fahrzeuggewicht können ebenfalls das Eingriffsmaß beeinflussen, da diese Größen in eine Reaktionsträgheit des Fahrzeugs einfließen. Unter Eingriffsmaß wird die Veränderung des oder der Fahrparameter durch die Steuereinrichtung in Bezug zu den Auswirkungen auf den Fahrbetrieb verstanden. Wenn die Steuereinrichtung einen Fahrparameter derart verändert, dass eine Vollbremsung ausgelöst wird, so wird darunter ein sehr hohes Eingriffsmaß verstanden. Wenn hierdurch die Empfindlichkeit des Bremspedals nur leicht herauf- oder herabgesetzt wird, so wird darunter ein niedriges Eingriffsmaß verstanden.

Es ist ferner von Vorteil, dass der von dem Fahrer des Kraftfahrzeugs gesteuerte Fahrbetrieb dem Eingriff in den Fahrparameter durch die Steuereinrichtung übergeordnet ist. Dies kann beispielsweise dadurch realisiert werden, dass der Eingriff in den Fahrbetrieb durch die Steuereinrichtung mittels einer Bedieneinrichtung und/oder durch die Art und Weise einer Betätigung des Gaspedals oder der Lenkung oder der Bremse oder allgemeiner durch irgendeinen Eingriff in den Fahrbetrieb beendet werden kann. Auf diese Weise besteht für den Fahrer jederzeit die Möglichkeit, die Parkhilfe bei Bedarf auszuschalten oder durch die Art und Weise der Betätigung des Gaspedals das Kraftfahrzeug beliebig nahe an ein Hindernis zu bewegen, um beispielsweise einen Anhänger ankoppeln zu können. Die Steuereinrichtung kann hierbei beispielsweise anhand von vorbestimmten oder auch von anpassbaren, d. h. lernfähigen Kennlinien des Gaspedalwegs und der Gaspedalbetätigungsgeschwindigkeit in Zusammenhang mit dem Fahrzeugzustand (Geschwindigkeit, Beschleunigung, Fahrtrichtung) den Fahrerwunsch erkennen. Von einer bewussten Betätigung des Gaspedals durch den Fahrer ist zum Beispiel auszugehen, wenn das Gaspedal stark und schnell betätigt wird.

Ferner ist es von Vorteil, wenn die Parkhilfe oberhalb einer vorbestimmten Fahrgeschwindigkeit des Kraftfahrzeugs ausgeschaltet oder automatisch außer Kraft gesetzt wird oder ohne Auswirkungen auf mindestens einen Fahrparameter ist. Auf diese Weise kann sichergestellt werden, dass das System während einer normalen Fahrt, d. h. außerhalb eines Parkvorgangs, nicht auf Hindernisse bzw. Gegenstände in der Nähe des Kraftfahrzeugs reagiert und dadurch den Fahrer gegebenenfalls irritiert.

In einer Ausgestaltung der Erfindung ist in der Steuereinrichtung mindestens ein weiterer Grenzwert für einen Abstandswert speicherbar oder gespeichert, wobei die Steuereinrichtung bei Unter- und/oder Überschreitung des weiteren Grenzwertes den Fahrer des Kraftfahrzeugs akustisch und/oder haptisch warnt. Hierdurch ist es möglich, beispielsweise den Fahrer zunächst bei Unterschreitung eines ersten Grenzwertes zu warnen, bevor ein Eingriff in einen Fahrparameter bei Unterschreitung eines weiteren Grenzwertes erfolgt.

Die Erfindung wird nachfolgend anhand der Zeichnungen erläutert. Dabei zeigen
- Figur 1: eine schematische Darstellung des Aufbaus einer Park- und Fahrhilfe
- Figur 2: ein Kraftfahrzeug beim Einfahren in eine Kopfparklücke
- Figur 3: ein Kraftfahrzeug beim Einparken in eine Längsparklücke
- Figur 4: ein Kraftfahrzeug beim Auffahren an ein Hindernis

Die wesentlichen Bestandteile der Parkhilfe sind eine Steuereinrichtung 10, die beispielsweise in eine übliche Steuerung des Kraftfahrzeugs 1 integriert oder als separate Komponente vorgesehen sein kann, und mehrere Abstandssensoren 12, die an dem Kraftfahrzeug 1 angebracht sind. Als Abstandssensoren 12 werden vorzugsweise Ultraschallsensoren eingesetzt. Es ist jedoch ebenso möglich, andere Abstandssensoren, wie beispielsweise Laser-, Radar- oder Infrarotsensoren zu verwenden. Weiterhin möglich ist die Verwendung mindestens einer Kamera mit einer nachfolgenden Bildauswertung, welche aus den Bilddaten Abstandswerte ermittelt. Die Abstandssensoren 12 sind in bekannter Weise insbesondere an äußeren Ecken oder Kanten des Kraftfahrzeugs 1 angebracht, da eine etwaige Kollision mit einem Hindernis H1,H2,H3,H4 in vielen Fällen im Bereich der Ecken des Kraftfahrzeugs 1 erfolgt. Zusätzlich können auch Abstandssensoren 12 in den Zwischenbereichen des Kraftfahrzeugs 1 angebracht sein, um beispielsweise auch Hindernisse H1,H2,H3,H4 um das Kraftfahrzeug 1 herum erfassen zu können, wie dies bereits aus dem Stand der Technik bekannt ist.

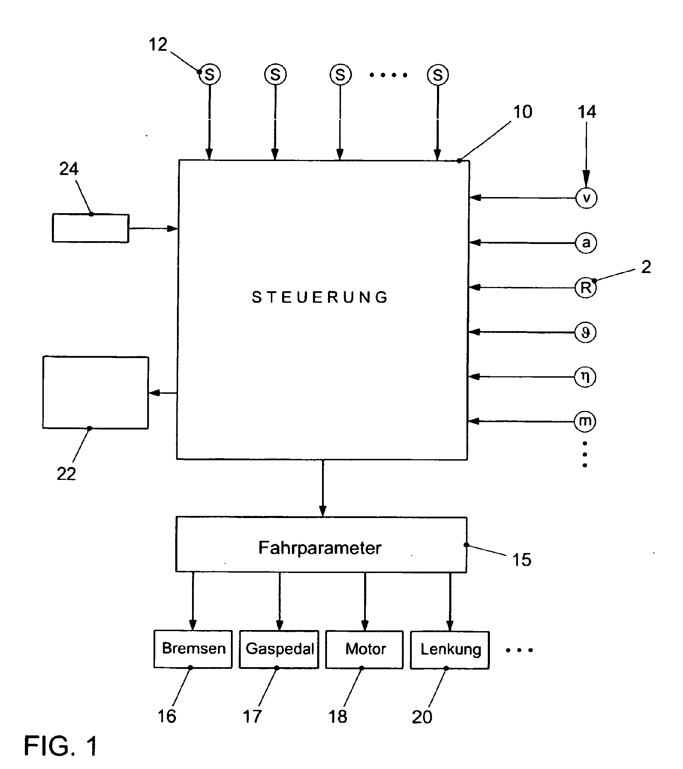

Die Steuereinrichtung 10 ist ferner mit verschiedenen Fahrzustandssensoren 14 verbunden, welche verschiedene physikalische Größen bezüglich des aktuellen Fahrbetriebs des Kraftfahrzeugs erfassen. Die Fahrzustandssensoren 14 erfassen bzw. ermitteln in direkter bzw. indirekter Weise insbesondere den Weg, die Geschwindigkeit (v), die Beschleunigung (a) und die Fahrtrichtung 2 (R) des Kraftfahrzeugs 1. Weitere Fahrzustandssensoren 14 dienen der Ermittlung des Lenkwinkels (ϑ), der Fahrbahnneigung (η) und des Gewichts (m) des Kraftfahrzeugs. Die vorliegende Erfindung ist aber selbstverständlich nicht auf die hier genannten Größen zur Bestimmung des aktuellen Fahrbetriebs beschränkt, was die drei vertikal angeordneten Punkte in der Figur 1 andeuten.

Die Steuereinrichtung 10 ermittelt in Abhängigkeit von der aktuellen Fahrsituation, welche mit Hilfe der Fahrzustandssensoren 14 erfasst wird, für die Erfassungsbereiche der Abstandssensoren 12 einen eigenen unteren Grenzwert G1,G2 als Maß für eine drohende Kollision des Kraftfahrzeugs 1 mit einem Hindernis H1,H2,H3,H4. Diese unteren Grenzwerte G1,G2 werden für die jeweiligen Abstandssensoren 12 unabhängig voneinander bestimmt. Stark vereinfacht ausgedrückt, können zum Beispiel bei einer Rückwärtsfahrt des Kraftfahrzeugs 1 die unteren Grenzwerte G1,G2 der Abstandswerte R1,R2,R3 der hinten an dem Kraftfahrzeug 1 angebrachten Abstandssensoren 12 auf einen höheren Grenzwert G1,G2 gesetzt werden als diejenigen der vorne am Kraftfahrzeug 1 angebrachten Abstandssensoren 12. Ferner werden die unteren Grenzwerte G1,G2 mit zunehmender Fahrzeuggeschwindigkeit (v) und zunehmender Beschleunigung (a) erhöht.

Bei einem Parkvorgang eines Kraftfahrzeugs 1 in eine diagonal rechts zurückliegende Längsparklücke werden beispielsweise bei Lenkeinschlag zum Rückwärtseinfahren in diese Parklücke die Grenzwerte G1,G2 der Abstandswerte R1,R2,R3 vorne links am Kraftfahrzeug 1 in Abhängigkeit vom Lenkwinkel höher bzw. je nach Auslegung oder Fahrsituation auch niedriger gesetzt. Der eingeschlagene Lenkwinkel ist ein Maß dafür, inwieweit das Kraftfahrzeug 1 in einen Bereich neben dem Fahrzeug einfahren könnte. Demzufolge ist dieser Bereich auf das Vorhandensein von Hindernissen H1,H2,H3,H4 oder Objekten zu überwachen.

Weiterhin kann es sinnvoll sein, annähernde Verkehrsteilnehmer im rückwärtigen Raum zu überwachen, um den Parkvorgang gegebenenfalls abbrechen oder anhalten zu können.

Durch die dynamische Anpassung der Grenzwerte G1,G2 der Abstandswerte R1,R2,R3 der Abstandssensoren 12 wird die Sicherheit und Genauigkeit eines Einpark- oder Rangiervorgangs eines Kraftfahrzeugs 1 gegenüber herkömmlichen Systemen bei gleichzeitiger Beibehaltung eines hohen Komforts für den Fahrer erhöht. Die Anpassung führt weiterhin dazu, dass die Grenzwerte G1,G2 je nach Fahrsituation oder Fahrerbedarf optimal anpassbar sind.

Sobald wenigstens ein Abstandssensor 12 einen Abstandswert R1,R2,R3 des Kraftfahrzeugs 1 zu einem Hindernis H1,H2,H3,H4 ermittelt, der den dynamisch angepassten jeweiligen unteren Grenzwert G1,G2 des Abstandswertes R1,R2,R3 unterschreitet, greift die Steuereinrichtung 10 aktiv in mindestens einen Fahrparameter 15 des Kraftfahrzeugs 1 ein. Dies geschieht beispielsweise durch Erhöhen eines Bremsdrucks des Bremsensystems 16, eine Verringerung der Motorleistung 18 oder einen Eingriff in das Lenksystem 20 des Kraftfahrzeugs 1. Weitere Kraftfahrzeugkomponenten, in die durch Veränderung eines Fahrparameters eingegriffen werden kann, sind durch drei horizontale Punkte in Figur 1 angedeutet. Es ist auch möglich die Empfindlichkeit der Bremse oder des Bremspedals, die Empfindlichkeit der Lenkung oder die Empfindlichkeit des Gaspedals oder des Motorgassystems zu verändern. Unter Empfindlichkeit ist das Ansprechverhalten eines Systems zu verstehen, also wie beispielsweise die Lenkung (Ausgangswert) bei Einschlag eines bestimmten Lenkwinkels (Eingangswert) reagiert. Weitere Fahrzeugparameter können dabei zusätzlich in die Empfindlichkeit einfließen. So ist bekannt die Lenkung des Kraftfahrzeugs 1 in Abhängigkeit der Fahrzeuggeschwindigkeit auszuführen. Die Empfindlichkeit kann dabei zusätzlich von mindestens einem Eingangswert und von zeitlichen Ableitungen der Eingangswerte abhängen.

Im weiteren Sinn sollen auch die Parametrierung oder Auslösung reversibler Sicherheitsmassnahmen (z. B. Aktivierung eines reversiblen Gurtstraffer) unter Eingriff in einen Fahrparameter zählen.

Die Art und Weise derartiger aktiver Eingriffe in den Fahrbetrieb des Kraftfahrzeugs 1 ist aus dem Stand der Technik bereits bekannt, weshalb an dieser Stelle auf eine detailliertere Erläuterung verzichtet wird. Insbesondere ist die vorliegende Erfindung nicht auf eine spezielle Art eines aktiven Eingriffs in den Fahrbetrieb des Kraftfahrzeugs 1 beschränkt. Vorzugsweise hängt allerdings das Maß des Eingriffs, d. h. beispielsweise die Erhöhung des Bremsdrucks, die Erniedrigung der Motorleistung, die Einstellung einer Lenkempfindlichkeit oder dergleichen neben dem durch die Abstandssensoren 12 ermittelten Abstandswert R1,R2,R3 Kraftfahrzeugs 1 von der durch die Fahrzustandssensoren 14 erfassten Geschwindigkeit, Beschleunigung, Fahrtrichtung, Fahrbahnneigung und/oder Gewicht des Kraftfahrzeugs 1 ab. Zum Beispiel wird der Bremsdruck bei einem geringeren Abstandswert R1,R2,R3 zu einem Hindernis H1,H2,H3,H4 und bei einer höheren Fahrzeuggeschwindigkeit stärker erhöht als bei einem großen ermittelten Abstandswert R1,R2,R3 oder einer niedrigen Fahrzeuggeschwindigkeit.

Zusätzlich kann die Steuereinrichtung 10 mit einer optischen und/oder akustischen und/oder haptischen Warnvorrichtung 22 verbunden sein, um den Fahrer des Kraftfahrzeugs neben dem aktiven Eingriff in den Fahrbetrieb auch optisch und/oder akustisch und/oder haptisch auf eine drohende Kollision des Kraftfahrzeugs 1 mit einem Hindernis H1,H2,H3,H4 hinzuweisen. Optische Warnvorrichtungen 22 umfassen beispielsweise Anzeigen mit Text- oder Symboldarstellungen, LEDs, head-up-displays. Akustische Warnvorrichtungen, können beispielsweise Summer, Hupen, Lautsprecher sein. In dem akustischen Signal kann die Gefährlichkeit oder Dringlichkeit der Warnung kodiert sein. Beispielsweise durch unterschiedliche Tonhöhen, intermittierende Töne oder auch durch eine Sprachansage. Als haptische Warnvorrichtung kann beispielsweise ein Vibrationslenkrad, -sitz, -pedal, -hebel etc. verstanden werden.

Um dem Fahrer jedoch jederzeit die Herrschaft über sein Fahrzeug zu gewähren, ist die Park- und Fahrhilfe dem Fahrerwunsch untergeordnet. Mit anderen Worten ist der von dem Fahrer des Kraftfahrzeugs 1 gesteuerte Fahrbetrieb dem Eingriff in den Fahrparameter 15 durch die Steuereinrichtung 10 übergeordnet. Dies lässt sich zum Beispiel durch eine Bedieneinrichtung 24 realisieren, mit der der Fahrer bei Bedarf die Park- und Fahrhilfe ausschalten kann. Die Bedieneinrichtung 24 kann auch als auswählbarer Menüpunkt in einem Auswahlmenü einer Anzeige- und Bedienvorrichtung, z. B. eines Bordcomputers, integriert sein.

Eine weitere Möglichkeit besteht darin, dass der Fahrer des Kraftfahrzeugs 1 durch die Art und Weise der Betätigung des Gaspedals einen von der Parkhilfe eingeleiteten Bremsvorgang abbrechen bzw. überstimmen kann. Dies wird zum Beispiel durch Analyse der Art und Weise der Betätigung des Bremspedals durch die Steuereinrichtung 10 realisiert. Die Steuereinrichtung 10 kann anhand von vorbestimmten oder auch von anpassbaren, d. h. lernfähigen Kennlinien des Gaspedalwegs und der Gaspedalbetätigungsgeschwindigkeit in Zusammenhang mit dem Fahrzeugzustand (Geschwindigkeit, Beschleunigung, Fahrtrichtung) den Fahrerwunsch erkennen. Von einer bewussten Betätigung des Gaspedals durch den Fahrer ist zum Beispiel auszugehen, wenn das Gaspedal trotz eingeleiteter Gegenmaßnahmen der Parkhilfe (z.B. Verzögerung des Kraftfahrzeugs 1 durch Bremsenaktivierung) in einem zu bestimmenden Zeitintervall stärker betätigt wird. Durch diese Maßnahmen ist es beispielsweise möglich, dass der Fahrer bei Bedarf zum Beispiel bis zum Kontakt mit einem Hindernis H1,H2,H3,H4 rangieren kann.

Schließlich beinhaltet die Parkhilfe gemäß der Erfindung vorzugsweise auch eine automatische Abschaltung des Systems bei Fahrzeuggeschwindigkeit von zum Beispiel mehr als 10 bis 15 km/h. Dies bedeutet, dass bei einer höheren Fahrzeuggeschwindigkeit durch die Steuereinrichtung 10 auf keinen Fall ein Eingriff in einen Fahrparameter 15 oder eine akustische/optische/haptische Warnung des Fahrers erfolgt, selbst wenn einer der Abstandssensoren 12 ein nahes Hindernis H1,H2,H3,H4 erfasst haben sollte. Diese Vorkehrung dient der Erhöhung der Fahrsicherheit, da es beispielsweise passieren könnte, dass bei einer Fahrt auf einer Autobahn oder Landstraße mit relativ hoher Geschwindigkeit einer der Abstandssensoren 12 z. B. einen Vogel erfasst, der sehr nahe an das Kraftfahrzeug 1 herankommt, und dadurch einen aktiven Eingriff in einen Fahrparameter und eine Warnung an den Fahrer auslöst. Dies könnte zu erheblichen Irritationen bzw. Ablenkungen des Fahrers und letztlich sogar zu Unfällen führen. Im Zusammenhang mit ACC-Systemen (Adaptive Fahrgeschwindigkeitsanpassung) lässt sich ein gleitender Übergang realisieren, wobei im Übergangsbereich eine Fusion unterschiedlicher Sensorik zum Tragen kommen kann. Damit würde auch die für die Parkhilfe festgelegte Grenzgeschwindigkeit in einen Geschwindigkeitsüberlagerungsbereich übergehen.

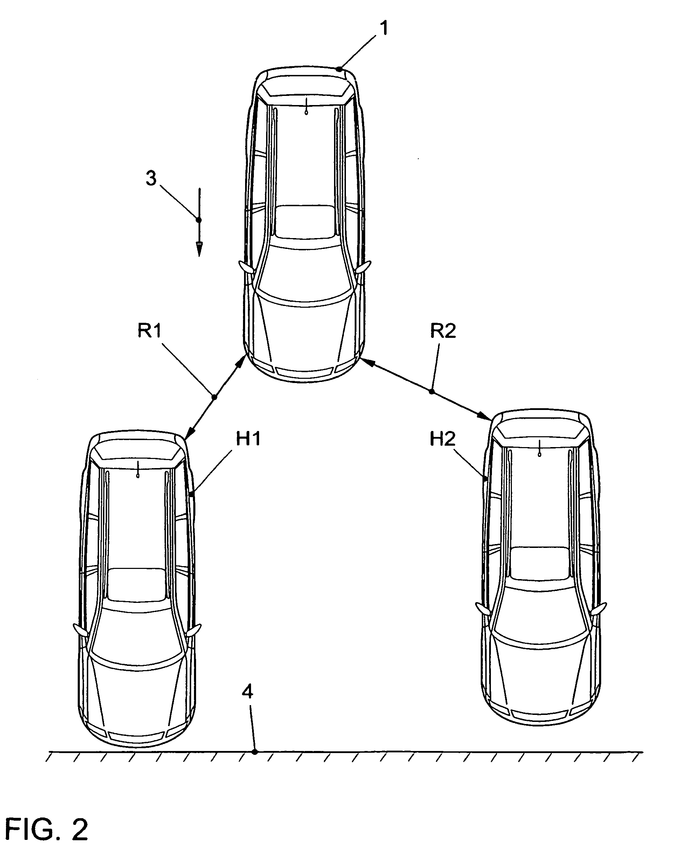

Figur 2 zeigt ein Kraftfahrzeug 1 beim Einfahren in eine Kopfparklücke, die zwischen den Hindernissen H1,H2 und der Begrenzung 4, z. B. einer Mauer ausgebildet ist. Das Kraftfahrzeug 1 fährt in Einparkrichtung 3 ein. Dabei werden von nicht dargestellten Abstandssensoren 12 unter anderem die Abstandswerte R1 und R2 erfasst. Sobald ein Abstandswert R1,R2 einen Grenzwert G1,G2 unterschreitet, wird durch die Steuereinrichtung 10 in einen Fahrparameter 15 einer Fahrzeugeinrichtung eingegriffen. Dabei ist es beispielsweise auch möglich, dass in der Steuereinrichtung 10 ein Fahrerassistenzsystem realisiert ist, dessen Parameter verändert werden. Bei Unterschreitung wird beispielsweise die Geschwindigkeit des Kraftfahrzeugs 1 bei gleicher Gaspedalstellung reduziert. Es ist auch denkbar, dass in die Lenkung derart eingegriffen wird, dass der jeweilige seitliche Abstand zu den Hindernissen H1,H2 auf einen gleichen Abstandswert R1 ,R2 ausgeglichen wird.

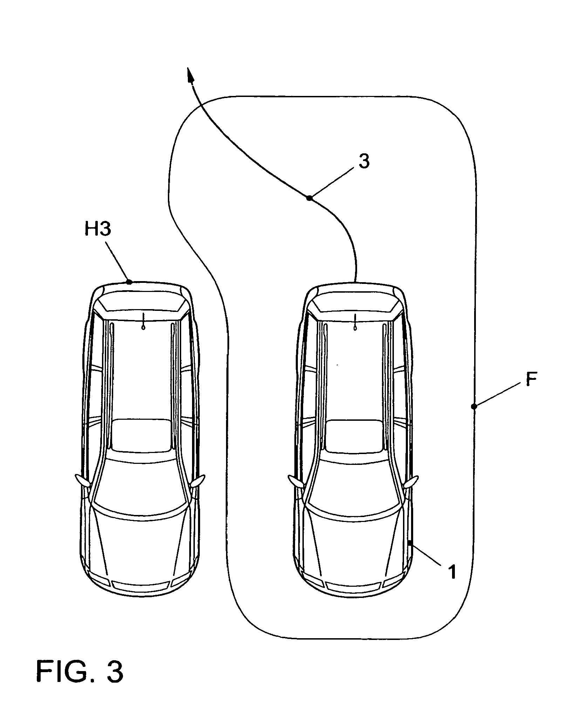

In Figur 3 ist ein Kraftfahrzeug 1 beim Einparken in eine Längsparklücke, welche hinter dem Hindernis H3 angeordnet ist, dargestellt. Der Einparkverlauf 5 ist schematisch dargestellt. Um das Kraftfahrzeug herum wird ein Raum F überwacht, der dynamisch an die Fahrsituation angepasst wird. Wird beispielsweise ein in dieser Situation eingelegter Rückwärtsgang ausgekuppelt und ein Vorwärtsgang eingelegt, wird die Überwachung des rückwärtigen Raumes hinter dem Kraftfahrzeug 1 reduziert oder ganz eingestellt.

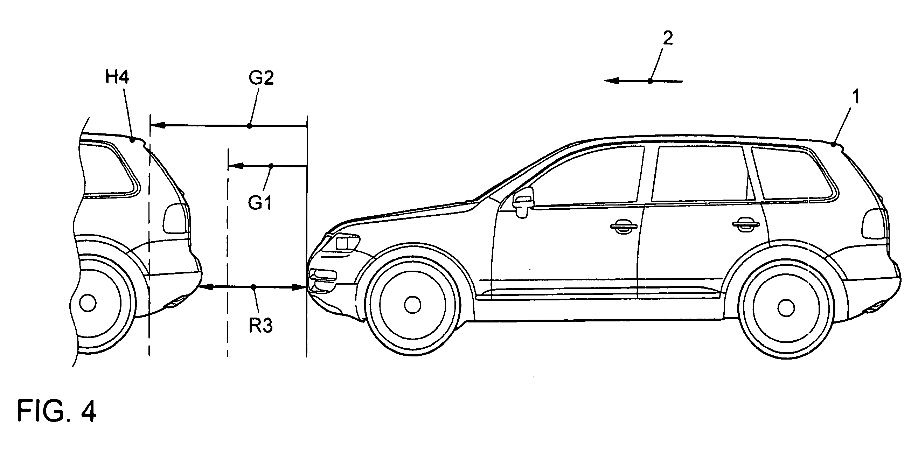

Figur 4 zeigt in einer Ausführungsform ein Kraftfahrzeug 1 mit einer Fahrtrichtung 2 beim Auffahren an ein Hindernis H4. Nicht dargestellte Abstandssensoren 12 erfassen dabei den Abstandswert R3. Wenn der Abstandswert R3 kleiner als der Grenzwert G2 ist, erfolgt eine akustische und/oder optische und/oder haptische Warnung über eine nicht dargestellte Warnvorrichtung 22 an den Fahrer. Falls der Abstand zu dem Hindernis H4 weiter reduziert wird, so dass der Abstandswert R3 den Grenzwert G1 unterschreitet, erfolgt durch die Steuereinrichtung 10 ein Eingriff in einen Fahrparameter 15. So könnte beispielsweise eine Stillstandsbremsung des Kraftfahrzeugs 1 eingeleitet werden.

In dem in Figur 4 gezeigten Beispiel würde aufgrund der Unterschreitung des Grenzwertes G2 eine Warnung an den Fahrzeugführer ausgegeben. Ein Eingriff in einen Fahrparameter 15 erfolgt jedoch erst, wenn das Kraftfahrzeug 1 sich dem Hindernis H4 weiter nähert, so dass der Grenzwert G1 unterschritten wird.

Es sei an dieser Stelle darauf hingewiesen, dass die vorliegende Erfindung weder auf spezielle Arten und Anordnungen der Abstandssensoren 12 noch auf spezielle Fahrzustandssensoren 14 oder bestimmte Eingriffe in Fahrparameter 15 des Kraftfahrzeugs 1 beschränkt ist.

### BEZUGSZEICHENLISTE

- 1: Kraftfahrzeug
- 2: Fahrtrichtung
- 3: Einparkrichtung
- 4: Begrenzung
- 5: Einparkverlauf
- 10: Steuereinrichtung
- 12: Abstandssensoren
- 14: Fahrzustandssensoren
- 15: Fahrparameter
- 16: Bremsensystem
- 17: Gaspedal
- 18: Motor
- 20: Lenksystem
- 22: Warnvorrichtung
- 24: Bedieneinrichtung
- R1,R2,R3: Abstandswert
- H1,H2,H3,H4: Hindernis
- G1,G2: Grenzwert
- F: Funktion

## Patentansprüche

1. Parkhilfe für ein Kraftfahrzeug (1) mit mindestens einem an dem Kraftfahrzeug (1) anbringbaren Abstandssensor (12) zum Ermitteln mindestens eines Abstandswertes (R1,R2,R3) zwischen dem Kraftfahrzeug (1) und mindestens einem Hindernis (H1,H2,H3,H4), sowie mit einer Steuereinrichtung (10), die in Abhängigkeit von mindestens einem ermittelten Abstandswert (R1,R2,R3) in mindestens einen Fahrparameter (15) einer Fahrzeugeinrichtung des Kraftfahrzeugs (1) eingreift, **dadurch gekennzeichnet, dass** in der Steuereinrichtung (10) mindestens ein Grenzwert (G1) für einen Abstandswert (R1,R2,R3) speicherbar oder gespeichert ist, wobei der Grenzwert (G1) in Abhängigkeit der Fahrsituation veränderbar ist und wobei die Steuereinrichtung (10) bei Unter- und/oder Überschreitung des mindestens einen Grenzwertes (G1) in mindestens einen Fahrparameter (15) einer Fahrzeugeinrichtung eingreift.

2. Parkhilfe für ein Kraftfahrzeug (1) nach Anspruch 1, **dadurch gekennzeichnet, dass** die Steuereinrichtung (10) bei Unter- und/oder Überschreitung mindestens eines Grenzwertes (G1) oder bei Eingriff in einen Fahrparameter (15) den Fahrer des Kraftfahrzeugs (1) akustisch und/oder optisch und/oder haptisch warnt.

3. Parkhilfe für ein Kraftfahrzeug (1) nach Anspruch 1 oder 2, **dadurch gekennzeichnet, dass** mindestens ein Grenzwert (G1, G2) eine Funktion von der Fahrgeschwindigkeit und/oder der Fahrtrichtung (2) und/oder des Lenkwinkels des Kraftfahrzeugs (1) ist.

4. Parkhilfe für ein Kraftfahrzeug (1) nach einem der vorangehenden Ansprüche, **dadurch gekennzeichnet, dass** die Steuereinrichtung (10) bei Unter- und/oder Überschreitung des mindestens einen Grenzwertes (G1) in einen Fahrparameter (15) des Bremssystems (16) und/oder des Motors (18) und/oder des Gaspedals (17) und/oder der Lenkung (20) des Kraftfahrzeugs (1) eingreift.

5. Parkhilfe für ein Kraftfahrzeug (1) nach einem der vorangehenden Ansprüche, **dadurch gekennzeichnet, dass** das Maß des Eingriffs der Steuereinrichtung (10) in den Fahrparameter (15) von der Geschwindigkeit und/oder der Beschleunigung und/oder der Fahrtrichtung (2) und/oder der Fahrsituation abhängt.

6. Parkhilfe für ein Kraftfahrzeug (1) nach einem der vorangehenden Ansprüche, **dadurch gekennzeichnet, dass** das Maß des Eingriffs der Steuereinrichtung (10) in den Fahrparameter (15) von mindestens einem ermittelten Abstandswert (R1,R2,R3) und/oder der Fahrbahnneigung und/oder dem Fahrzeuggewicht abhängt.

7. Parkhilfe für ein Kraftfahrzeug (1) nach einem der vorangehenden Ansprüche, **dadurch gekennzeichnet, dass** der von dem Fahrer des Kraftfahrzeugs (1) gesteuerte Fahrbetrieb dem Eingriff in den Fahrparameter (15) durch die Steuereinrichtung (10) übergeordnet ist.

8. Parkhilfe für ein Kraftfahrzeug (1) nach einem der vorangehenden Ansprüche, **dadurch gekennzeichnet, dass** der von dem Fahrer des Kraftfahrzeugs (1) gesteuerte Fahrbetrieb durch die Steuereinrichtung (10) mittels einer Bedieneinrichtung (24) und/oder durch mindestens einen Eingriff des Fahrers in den Fahrbetrieb ausschaltbar ist.

9. Parkhilfe für ein Kraftfahrzeug (1) nach einem der Ansprüche7 oder 8, **dadurch gekennzeichnet, dass** der Eingriff der Steuereinrichtung (10) in den Fahrparameter (15) oberhalb einer vorgegebenen Fahrgeschwindigkeit des Kraftfahrzeugs (1) ausgeschaltet oder ohne Auswirkungen auf mindestens einen Fahrparameter (15) ist.

10. Parkhilfe für ein Kraftfahrzeug (1) nach einem der vorangehenden Ansprüche, **dadurch gekennzeichnet, dass** in der Steuereinrichtung (10) mindestens ein weiterer Grenzwert (G2) für einen Abstandswert (R1,R2,R3) speicherbar oder gespeichert ist, wobei die Steuereinrichtung (10) bei Unter- und/oder Überschreitung des weiteren Grenzwertes (G2) den Fahrer des Kraftfahrzeugs (1) akustisch und/oder optisch und/oder haptisch warnt.

## Claims

1. Parking assisting device for a motor vehicle (1) having at least one distance sensor (12) which can be attached to the motor vehicle (1) and has the purpose of determining at least one distance value (R1, R2, R3) between the motor vehicle (1) and at least one obstacle (H1, H2, H3, H4), and having a control device (10) which intervenes, as a function of at least one determined distance value (R1, R2, R3), in at least one driving parameter (15) of a vehicle device of the motor vehicle (1), **characterized in that** at least one limiting value (G1) for a distance value (R1, R2, R3) can be stored or is stored in the control device (10), wherein the limiting value (G1) can be varied as a function of the driving situation, and wherein the control device (10) intervenes in at least one driving parameter (15) of a vehicle device when the at least one limiting value (G1) is undershot and/or exceeded.

2. Parking assisting device for a motor vehicle (1) according to Claim 1, **characterized in that** the control device (10) warns the driver of the motor vehicle (1) in an audible and/or visual and/or haptic fashion when at least one limiting value (G1) is undershot and/or exceeded or when there is an intervention in a driving parameter (15).

3. Parking assisting device for a motor vehicle (1) according to Claim 1 or 2, **characterized in that** at least one limiting value (G1, G2) is a function of the driving speed and/or the driving direction (2) and/or the steering angle of the motor vehicle (1).

4. Parking assisting device for a motor vehicle (1) according to one of the preceding claims, **characterized in that** the control device (10) intervenes in a driving parameter (15) of the brake system (16) and/or the engine (18) and/or of the accelerator pedal (17) and/or of the steering system (20) of the motor vehicle (1) when the at least one limiting value (G1) is undershot and/or exceeded.

5. Parking assisting device for a motor vehicle (1) according to one of the preceding claims, **characterized in that** the measure of the intervention by the control device (10) in the driving parameter (15) depends on the velocity and/or the acceleration and/or the driving unit direction (2) and/or the driving situation.

6. Parking assisting device for a motor vehicle (1) according to one of the preceding claims, **characterized in that** the measure of the intervention by the control device (10) in the driving parameter (15) depends on at least one determined distance value (R1, R2, R3) and/or the inclination of the underlying surface and/or the weight of the vehicle.

7. Parking assisting device for a motor vehicle (1) according to one of the preceding claims, **characterized in that** the driving operation which is controlled by the driver of the motor vehicle (1) is superordinate to the intervention in the driving parameter (15) by the control device (10).

8. Parking assisting device for a motor vehicle (1) according to one of the preceding claims, **characterized in that** the driving operation which is controlled by the driver of the motor vehicle (1) can be switched off by the control device (10) by means of an operator control device (24) and/or by means of an intervention by the driver in the driving operation.

9. Parking assisting device for a motor vehicle (1) according to one of Claims 7 or 8, **characterized in that** the intervention by the control device (10) in the driving parameter (15) is switched off above a predefined velocity of the motor vehicle (1) or is without effect on at least one driving parameter (15).

10. Parking assisting device for a motor vehicle (1) according to one of the preceding claims, **characterized in that** at least one further limiting value (G2) for a distance value (R1, R2, R3) can be stored or is stored in the control device (10), wherein the control device (10) warns the driver of the motor vehicle (1) in an audible and/or visual and/or haptic fashion when the further limiting value (G2) is undershot and/or exceeded.

## Revendications

1. Aide au stationnement pour un véhicule automobile (1) comprenant au moins un détecteur d'espacement (12) pouvant être monté sur le véhicule automobile (1) pour déterminer au moins une valeur d'espacement (R1, R2, R3) entre le véhicule automobile (1) et au moins un obstacle (H1, H2, H3, H4) et comprenant un dispositif de commande (10) qui intervient, en fonction d'au moins une valeur d'espacement (R1, R2, R3) déterminée, dans au moins un paramètre de conduite (15) d'un dispositif du véhicule automobile (1), **caractérisée en ce qu'**au moins une valeur limite (G1) pour une valeur d'espacement (R1, R2, R3) peut être enregistrée ou est enregistrée dans le dispositif de commande (10), la valeur limite (G1) pouvant être modifiée en fonction de la situation de conduite et le dispositif de commande (10) intervenant dans au moins un paramètre de conduite (15) d'un dispositif du véhicule en cas de franchissement dans un sens et/ou dans l'autre de l'au moins une valeur limite (G1).

2. Aide au stationnement pour un véhicule automobile (1) selon la revendication 1, **caractérisée en ce que** le dispositif de commande (10), en cas de franchissement dans un sens et/ou dans l'autre d'au moins une valeur limite (G1) ou en cas d'intervention dans un paramètre de conduite (15), prévient le conducteur du véhicule automobile (1) de manière sonore et/ou visuelle et/ou haptique.

3. Aide au stationnement pour un véhicule automobile (1) selon la revendication 1 ou 2, **caractérisée en ce qu'**au moins une valeur limite (G1, G2) est une fonction de la vitesse de déplacement et/ou du sens de déplacement (2) et/ou de l'angle de direction du véhicule automobile (1).

4. Aide au stationnement pour un véhicule automobile (1) selon l'une des revendications précédentes, **caractérisée en ce que** le dispositif de commande (10), en cas de franchissement dans un sens et/ou dans l'autre de l'au moins une valeur limite (G1), intervient dans un paramètre de conduite (15) du système de freinage (16) et/ou du moteur (18) et/ou de la pédale d'accélération (17) et/ou de la direction (20) du véhicule automobile (1).

5. Aide au stationnement pour un véhicule automobile (1) selon l'une des revendications précédentes, **caractérisée en ce que** le niveau d'intervention du dispositif de commande (10) dans le paramètre de conduite (15) dépend de la vitesse et/ou de l'accélération et/ou du sens de déplacement (2) et/ou de la situation de conduite.

6. Aide au stationnement pour un véhicule automobile (1) selon l'une des revendications précédentes, **caractérisée en ce que** le niveau d'intervention du dispositif de commande (10) dans le paramètre de conduite (15) dépend d'au moins une valeur d'espacement (R1, R2, R3) déterminée et/ou de l'inclinaison de la chaussée et/ou du poids du véhicule.

7. Aide au stationnement pour un véhicule automobile (1) selon l'une des revendications précédentes, **caractérisée en ce que** le mode de conduite commandé par le conducteur du véhicule automobile (1) a priorité sur l'intervention du dispositif de commande (10) dans le paramètre de conduite (15).

8. Aide au' stationnement pour un véhicule automobile (1) selon l'une des revendications précédentes, **caractérisée en ce que** le mode de conduite commandé par le conducteur du véhicule automobile (1) peut être désactivé par le dispositif de commande (10) au moyen d'un dispositif d'actionnement (24) et/ou par au moins une intervention du conducteur dans le mode de conduite.

9. Aide au stationnement pour un véhicule automobile (1) selon la revendication 7 ou 8, **caractérisée en ce qu'**au-dessus d'une vitesse de déplacement, donnée du véhicule automobile (1), l'intervention du dispositif de commande (10) dans le paramètre de conduite (15) est désactivé ou est sans effet sur l'au moins un paramètre de conduite (15).

10. Aide au stationnement pour un véhicule automobile (1) selon l'une des revendications précédentes, **caractérisée en ce qu'**au moins une valeur limite supplémentaire (G2) pour une valeur d'espacement (R1, R2, R3) peut être enregistrée ou est enregistrée dans le dispositif de commande (10), le dispositif de commande (.10), en cas de franchissement dans un sens et/ou dans l'autre de la valeur limite supplémentaire (G2), prévenant le conducteur du véhicule automobile (1) de manière sonore et/ou visuelle et/ou haptique.
